# EUROPEAN PATENT SPECIFICATION

(11) **EP 2 546 581 B1**
(45) Date of publication and mention of the grant of the patent: **30.08.2017**
(21) Application number: 12176432.8
(22) Date of filing: 13.07.2012
(51) Int. Cl.: F24F 12/00, F28F 27/02

(54) **system comprising air-to-air-heat exchanger for heat recovery and method for controlling defrosting thereof**
System mit Luft-Luft-Wärmetauscher zur Wärmerückgewinnung und Methode zur Enteisungsregelung des Systems
système avec échangeur de chaleur air-air pour récupérer d'énergie et méthode de dégrivage du système

(30) Priority: 15.07.2011 SE 1150709
(43) Date of publication of application: 16.01.2013
(73) Proprietor: IV Produkt AB, 350 43 Växjö (SE)
(72) Inventor: Svensson, Bengt, 350 43 Växjö (SE); Magnusson, Per-Eric, 351 04 Växjö (SE)
(74) Representative: Awapatent AB

(56) References cited:
- WO-A1-01/22021
- DE-A1-102008 038 938
- DE-U1-202005 013 250
- SE-B- 463 944

## Description

### Technical Field

The invention relates to an air treatment system comprising a heat exchanger for transferring heat from warm exhaust air, that flows into the system via an outlet air duct of said system and leaves it via an exhaust air fan thereof and there between passes an exhaust air section of the heat exchanger, to cold supply air, that flows into the system via a supply air duct of said system and leaves it via a supply air fan thereof and there between passes a supply air section of the heat exchanger, said supply air section being separate from said exhaust air section, a bypass, that communicates with the supply air duct upstream of said supply air section and with the supply air fan downstream thereof and shows a flow resistance that corresponds to a normal through-flow resistance of the supply air section of the heat exchanger, and a damper device, that enables opening and closing of the bypass and of the supply air section on an upstream side the supply air section. The invention further relates to a method of controlling defrosting of an air treatment system.

### Prior Art

An air treatment system according to the preamble is known from the document SE 463 944. The air treatment system disclosed therein comprises two valve flaps, each having a first wing adapted to control part of a supply of air to a bypass. Said valve flaps each have a second wing being rigidly connected to said first wing and adapted to control a supply of air to one half each of a supply air section of a heat exchanger. In practice this means that opening and closing of the bypass and of the heat exchanger does follow a given scheme that in climate conditions leading to severe ice buildup in the heat exchanger, i.e. heavy cold outside and a relatively high air humidity of the exhaust air, renders efficient operation impossible.

From the document DE 10 2008 038 938 A1 an alternative solution is known for controlling air supply through and past a heat exchanger. The solution comprises a damper device with several slats next to each other. These are however controlled compulsive such that opening of a bypass through the heat exchanger leads to simultaneous closing of a passage through the heat exchanger and vice versa. In other words this solution is not sufficiently versatile in order to enable optimum adaptation of an air treatment system to operation in different weather conditions.

### Object of the Invention

Given this, a first object of the invention is to provide a more flexible air treatment system than the prior art ones. A second object of the invention is to provide a method of optimally controlling defrosting of an air treatment system according to the invention.

### Brief Summary of the Invention

According to the invention the first object is achieved by means of an air treatment system comprising the features of the preamble and being characterized in that the damper device is divided into at least three individually controllable portions, of which a first portion is adapted to stop an inflow of supply air into the bypass, to allow a predetermined throttled inflow of supply air into the bypass or to allow an unthrottled inflow of supply air into the bypass, a second portion is adapted to stop an inflow of supply air into in a first half of the supply air section of the heat exchanger or to allow an unthrottled inflow of supply air into said first half, and a third portion is adapted to stop an inflow of supply air into a second half of the supply air section of the heat exchanger or to allow an unthrottled inflow of supply air into said second half.

The advantage of this solution compared to the prior art according to the preamble is that it is better adaptable to different operating conditions and renders more modes of operation possible, especially when defrosting but also in terms of energy consumption.

Preferably the different portions of the damper device comprise a plurality of rotatable slats adapted to be controlled by means of an actuator per portion. The advantage of such slats is that they render a damper device possible that has a very low height and therefore is easy to install even in confined spaces. In addition, the rotational movement necessary for their control is easily accomplished even with small actuators.

To further facilitate installation of the damper device the rotatable slats of the different portions of the damper device preferably are mounted on a common frame, wherein said actuators preferably are carried by the common frame.

The second object of the invention is achieved by means of a method of controlling defrosting of an air treatment system according to the invention, said system under normal heat exchange operation working with a predetermined pressure drop across an exhaust air section of a heat exchanger and with a fully closed bypass and a fully open supply air section. The method according to the invention is characterized by the steps of measuring an outside temperature of supply air to the system, measuring of a pressure upstream of the exhaust air section of the heat exchanger, measuring before an exhaust air fan of a pressure downstream of the exhaust air section of the heat exchanger, calculating of a pressure drop across the exhaust air section of the heat exchanger, and, if a measured outside temperature is below the freezing point and there is an increased pressure drop, switching to a timed defrosting cycle, which is divided into four consecutive periods, namely a first and a fourth period, during which an inflow of supply air into the bypass is partially throttled, an inflow of supply air into the first half of the supply air section of the heat exchanger is completely stopped and an inflow of supply air into the other half of the supply air section of the heat exchanger is unthrottled, and a second and a third period, during which an inflow of supply air into the bypass is partially throttled, an inflow of supply air into the first half of the supply air section of the heat exchanger is unthrottled, and an inflow of supply air into the other half of the supply air section of the heat exchanger is completely stopped.

The great advantage of the inventive method compared to prior art is that it takes into account that a limited ice buildup takes place in an already defrosted half of the supply air section of the heat exchanger while a second half thereof is being defrosted. Partially defrosting the first half of the heat exchanger during a period of the defrosting cycle, followed by defrosting of the second half of the heat exchanger for two such periods and termination of the defrosting of the first half of the heat exchanger for another such period means that one in that way optimally takes into account said limited ice buildup, wherein the ice buildup on the second half of the heat exchanger is limited by the fact that, while the first half is being defrosted for the second time, the second half of the heat exchanger was defrosted immediately before that during a longer time of two directly successive periods. In that way the total defrosting time and thus the time during which the air treatment system operates at reduced efficiency can be effectively minimized.

The inventive method may further comprise the additional step of, if the time between the end of a timed defrosting cycle and the beginning of a new timed defrosting cycle is shorter than the predetermined time of the defrosting cycle, following the new defrosting cycle switching to a reduced heat exchanging mode, during which the inflow of supply air into the bypass is partially throttled and the inflow of inlet air into the two halves of the supply air section of the heat exchanger is unthrottled.

The advantage of this further step is that the operating mode created thereby, comprising bypassing of a portion of air past the otherwise open the supply air section of the heat exchanger, results in less ice buildup during these severe operating conditions and further an upheld heat exchange of the air treatment system, at least to some extent.

### Brief Description of the Drawings

A preferred embodiment of the air treatment system of the invention and the method of controlling thereof is described in more detail below with reference to the accompanying drawings, wherein:
Fig. 1 is a perspective view showing the air treatment system with partly broken away parts, and
Fig. 2 is a perspective view, also with partly broken away parts, showing only a central part of the air treatment system.

### Description of preferred embodiment

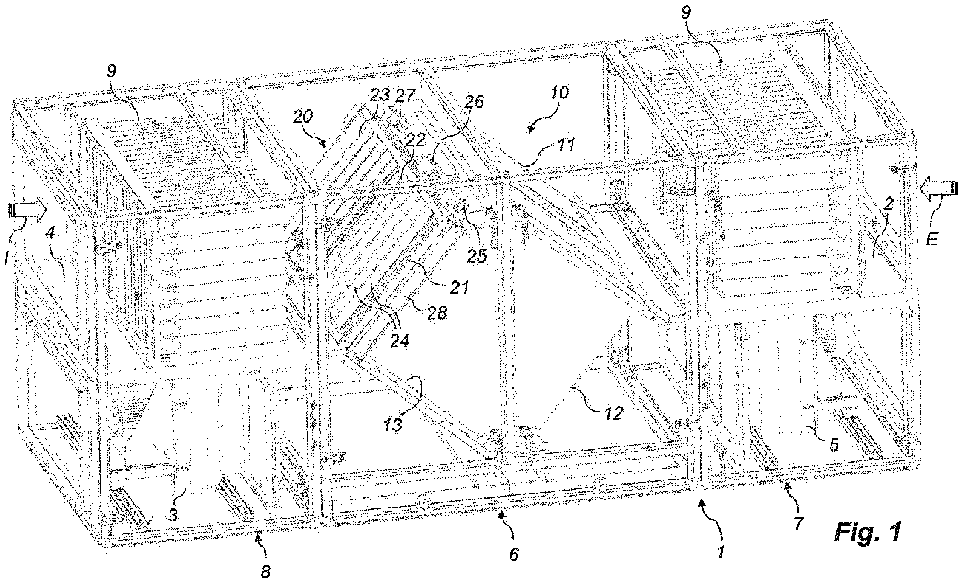

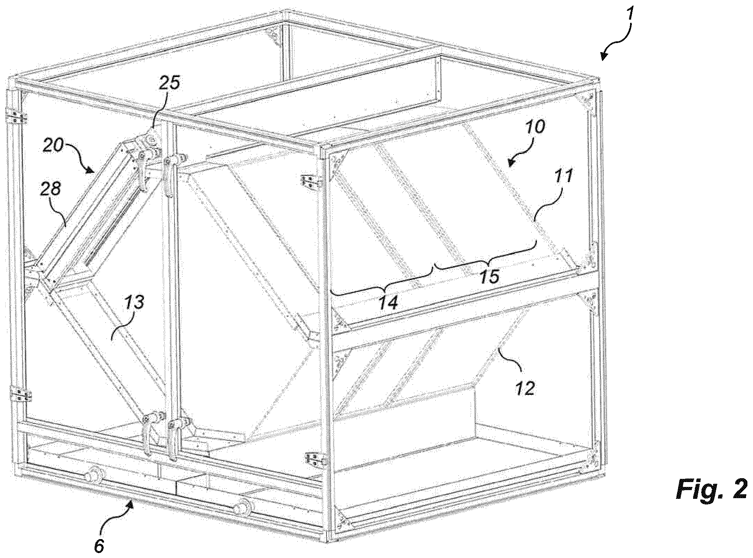

The air treatment system shown entirely in fig. 1 and partly in fig. 2 is modularly built up of sheet metal covered parts and comprises a central module 6, which is surrounded by an inside module 7 (to the right in fig. 1) and an outside module 8 (to the left in fig. 1). The central module comprises a heat exchanger 10, that substantially has the shape of a parallelepiped in a way well known for so-called plate heat exchangers, that comprise a plurality of parallel plates (not further shown) and rest in an inclined way on a longitudinal edge thereof. The heat exchanger 10 is intended to transfer heat from warm exhaust air E, flowing into the system 1 via bag filters 9 in an exhaust air duct 2 of the inside module 7 and leaves it via an exhaust air fan 3 in the outside module 8 and there between passes a exhaust air section 11 of the heat exchanger 10, to the cold supply air I, that flows into the system 1 via corresponding bag filters in a supply air duct 4 of the outside module 8 and leaves it via a supply air fan 5 of the inside module 7 and there between passes a supply air section 12 of the heat exchanger 10. The supply air section 12 is, again in a known manner for plate heat exchangers and therefore not further described, hermetically separated from the said exhaust section 11.

Apart from through to the heat exchanger 10, in the air treatment system 1 according to the invention supply air can flow through a bypass 13. The bypass is arranged next to heat exchanger 10 in the central module 6 and communicates with the supply air duct 4 upstream of said supply air section 12 and the supply air fan 5 downstream thereof and has a size which provides a flow resistance that corresponds to the normal throughput of the supply air section 12 of the heat exchanger 10. In this way it can be used in operating conditions when no heat exchange is desired in order to lead supply air I past the heat exchanger 10 without an abnormal pressure drop.

Upstream of the supply air section 12 of the heat exchanger 10 according to the invention there is a damper device 20. The damper device is divided into three individually controllable portions 21-23. The first one 21 of these is set up to stop an inflow of supply air I into the bypass 13, to allow a predetermined throttled inflow of supply air I into the bypass 13 or to allow an unthrottled inflow of supply air I into the bypass 13. The second portion 22 is adapted to stop an inflow of supply air I into the first half 14 of the supply air section 12 of the heat exchanger 10, or to allow an unthrottled inflow of supply air I into said first half 14. The third portion 23 is adapted to stop an inflow of supply air I into the second half 15 of the supply air section 12 of the heat exchanger 10, or to allow an unthrottled inflow of supply air I into said second half 15. How these control possibilities preferably are used is described below in connection with the description of the inventive method.

In the preferred embodiment of the invention, all three portions 21-23 of the damper device 20 comprise a plurality of rotary slats 24 which are suspended on a common frame 28. The slats 24 can be set individually for each portion 21-23 into a completely closed position or a fully open position or into other desired settings in between. They are controlled in common by means of an actuator 25-27 for each portion 21-23, for example in the form of servomotors, which are also supported by said frame 28. Thus, the damper device 20 forms a compact unit that can be easily handled and, as shown, fitted close to the supply air section 12 of the heat exchanger 10.

Thanks to the damper device 20 the air treatment system 1 described above can be controlled in a very flexible way. In cold weather conditions with risk of ice buildup in the exhaust air section 11 of the heat exchanger 10, according to the invention this is used in order to provide for effective and energy-efficient defrosting and, under extreme conditions, in order to delay the buildup of ice between the occasions when defrosting is required.

The method of defrosting includes a number of steps. In normal heat exchange operation of the air treatment system 1, wherein the supply air section 12 of the heat exchanger 10 is fully open and the bypass 13 is completely closed by the damper device 20 and a predetermined pressure drop is expected to exist across the exhaust air section 11 of the heat exchanger 10, the outside temperature of supply air I into the system 1 is measured, the pressure upstream of the exhaust air section 11 of the heat exchanger 10 is measured, and in front of the exhaust air fan 6 the pressure downstream of the exhaust air section 11 of the heat exchanger 10 is measured. The latter in order to be able to calculate the pressure drop across the exhaust air section 11 of the heat exchanger 10.

At a measured outdoor temperature below freezing and at an increased pressure drop, there is a switch to a timed defrosting cycle, which is divided into four consecutive periods, preferably having the same duration. During the first and the fourth of these periods an inflow of supply air I into the bypass 13 is partially throttled by the damper device 20, an inflow of supply air I into the first half 14 of the supply air section 12 of the heat exchanger 10 is completely stopped and an inflow of supply air I into the second half 15 the supply air section 12 of the heat exchanger 10 is unthrottled. During the second and the third of these periods an inflow of supply air I into the bypass 13 is partially throttled, an inflow of supply air I into the first half 14 of the supply air section 12 of the heat exchanger 10 is unthrottled, and an inflow of supply air I into the second half 15 of the supply air section 12 of the heat exchanger 10 completely stopped.

The division of the defrosting cycle in accordance with the invention takes into account that a limited ice buildup takes place on an already defrosted half (here the first half 14) of the supply air section 12 of the heat exchanger 10, while a second half (here the second half 15) thereof is being defrosted. Thereby, the total time of defrosting and thus the time during which the air treatment system 1 is working with reduced efficiency is effectively shortened.

During severe weather conditions with great cold outdoors and a relatively high air humidity of the exhaust air E, defrosting cycles may occur with very frequent intervals. In order to extend these intervals under such circumstances, the method according to the invention may comprise the further step of, if the time between the end of a timed defrosting cycle and the beginning of a new timed defrosting cycle is shorter than the predetermined time of the defrosting cycle, following the new defrosting cycle switching to a reduced heat exchanging mode. In this mode by means of the damper device 20 an inflow of supply air I into the bypass 13 is partially throttled and an inflow of supply air I into both halves of the supply air section 12 of the heat exchanger 10 is unthrottled. The thus produced bypass of part of the supply air I past the still open supply air section 12 of the heat exchanger 10 results in less cooling of the exhaust air section 11 of the heat exchanger 1 and thus in a slowed ice buildup thereon, wherein the heat exchange is still maintained to a certain extent.

It is understood that the above-described air treatment system 1 and the method therefore can be varied in different ways within the scope of the claims. It is also understood that the four above-described periods of equal length e.g. also may be considered to comprise a first period, a second period twice as long, and a third period, which is as long as the first period. Finally, it is understood that the four described periods need not be exactly the same length, but that the skilled person based on the idea behind the invention, in some cases can come up with different time lengths. The same person skilled in the art can moreover easily calculate and thus predetermine a suitable degree of throttling of the inflow of supply air I into the bypass 13 in cases when said inflow of has to be partially throttled.

## Claims

1. An air treatment system (1), comprising
a heat exchanger (10) for transferring heat from warm exhaust air (E), that flows into the system (1) via an outlet air duct (2) of said system (1) and leaves it via an exhaust air fan (3) thereof and there between passes an exhaust air section (11) of the heat exchanger (10), to cold supply air (I), that flows into the system (1) via a supply air duct (4) of said system (1) and leaves it via a supply air fan (5) thereof and there between passes a supply air section (12) of the heat exchanger (10), said supply air section (12) being separate from said exhaust air section (11),
a bypass (13), that communicates with the supply air duct (4) upstream of said supply air section (12) and the supply air fan (5) downstream thereof and shows a flow resistance that corresponds to a normal through-flow resistance of the supply air section (12) of the heat exchanger (10), and
a damper device (20), that enables opening and closing of the bypass (13) and of the supply air section (12) on an upstream side the supply air section (12),
**characterized in that**
the damper device (20) is divided into at least three individually controllable portions (21-23), of which
a first portion (21) is adapted to stop an inflow of supply air (I) into the bypass (13), to allow a predetermined throttled inflow of supply air (I) into the bypass (13) or to allow an unthrottled inflow of supply air (I) into the bypass (13),
a second portion (22) is adapted to stop an inflow of supply air (I) into in a first half (14) of the supply air section (12) of the heat exchanger (10) or to allow an unthrottled inflow of supply air (I) into said first half (14), and
a third portion (23) is adapted to stop an inflow of supply air (I) into a second half (15) of the supply air section (12) of the heat exchanger (10) or to allow an unthrottled inflow of supply air (I) into said second half (15).

2. The system (1) according to claim 1, wherein the different portions (21-23) of the damper device (20) comprise a plurality of rotatable slats (24) adapted to be controlled by means of an actuator (25-27) per portion (21-23).

3. The system (1) according to claim 2, wherein the rotatable slats (24) of the different portions (21-23) of the damper device (20) are mounted on a common frame (28).

4. The system (1) according to claim 3, wherein said actuators (25-27) are carried by the common frame (28).

5. A method of controlling defrosting of an air treatment system (1) according to any of the preceding claims, said system (1) under normal heat exchange operation working with a predetermined pressure drop across an exhaust air section (11) of a heat exchanger (10) and with a fully closed bypass (13) and a fully open supply air section (12),
**characterized by** the steps of
outside measuring of a temperature of supply air (I) to the system (1), measuring of a pressure upstream of the exhaust air section (11) of the heat exchanger (10),
measuring before an exhaust air fan (6) of a pressure downstream of the exhaust air section (11) of the heat exchanger (10),
calculating of a pressure drop across the exhaust air section (11) of the heat exchanger (10), and,
if a measured outside temperature is below the freezing point and there is an increased pressure drop, switching to a timed defrosting cycle, which is divided into four consecutive periods,
namely a first and a fourth period, during which an inflow of supply air (I) into the bypass (13) is partially throttled, an inflow of supply air (I) into the first half (14) of the supply air section (12) of the heat exchanger (10) is completely stopped and an inflow of supply air (I) into the other half (15) of the supply air section (12) of the heat exchanger (10) is unthrottled,
and a second and a third period, during which an inflow of supply air (I) into the bypass (13) is partially throttled, an inflow of supply air (I) into the first half (14) of the supply air section (12) of the heat exchanger (10) is unthrottled, and an inflow of supply air (I) into the other half (15) of the supply air section (12) of the heat exchanger (10) is completely stopped.

6. The method of claim 5, comprising the further step of, if the time between the end of a timed defrosting cycle and the beginning of a new timed defrosting cycle is shorter than the predetermined time of the defrosting cycle, following the new defrosting cycle switching to a reduced heat exchanging mode, during which the inflow of supply air (I) into the bypass (13) is partially throttled and the inflow of inlet air (I) into the two halves of the supply air section (12) of the heat exchanger (12) is unthrottled.

## Patentansprüche

1. Luftaufbereitungssystem (1), umfassend
einen Wärmetauscher (10) zum Übertragen von Wärme von warmer Abluft (E), die in das System (1) über einen Abluftkanal (2) des Systems (1) strömt und es über einen Abluftventilator (3) davon verlässt und dazwischen durch einen Abluftabschnitt (11) des Wärmetauschers (10) hindurchgeht, auf kalte Zuluft (I), die in das System (1) über einen Zuluftkanal (4) des Systems (1) strömt und es über einen Zuluftventilator (5) davon verlässt und dazwischen durch einen Zuluftabschnitt (12) des Wärmetauschers (10) hindurchgeht, wobei der Zuluftabschnitt (12) vom Abluftabschnitt (11) getrennt ist,
einen Bypass (13), der mit dem Zuluftkanal (4) vor dem Zuluftabschnitt (12) und dem Zuluftventilator (5) abströmseitig davon verbunden ist und einen Strömungswiderstand zeigt, der einem normalen Strömungswiderstand des Zuluftabschnitts (12) des Wärmetauschers (10) entspricht, und
eine Dämpfungsvorrichtung (20), die das Öffnen und Schließen des Bypasses (13) und des Zuluftabschnitts (12) an einer Anströmseite des Zuluftabschnitts (12) ermöglicht,
**dadurch gekennzeichnet, dass**
die Dämpfungsvorrichtung (20) in mindestens drei individuell steuerbare Teile (21-23) aufgeteilt ist, von denen
ein erster Teil (21) angepasst ist, einen Zustrom von Zuluft (I) in den Bypass (13) zu stoppen, einen vorbestimmten gedrosselten Zustrom von Zuluft (I) in den Bypass (13) zu ermöglichen oder einen ungedrosselten Zustrom von Zuluft (I) in den Bypass (13) zu ermöglichen,
ein zweiter Teil (22) angepasst ist, einen Zustrom von Zuluft (I) in einer ersten Hälfte (14) des Zuluftabschnitts (12) des Wärmetauschers (10) zu stoppen oder einen ungedrosselten Zustrom von Zuluft (I) in die erste Hälfte (14) zu ermöglichen, und
ein dritter Teil (23) angepasst ist, einen Zustrom von Zuluft (I) in eine zweite Hälfte (15) des Zuluftabschnitts (12) des Wärmetauschers (10) zu stoppen oder einen ungedrosselten Zustrom von Zuluft (I) in die zweite Hälfte (15) zu ermöglichen.

2. System (1) nach Anspruch 1, wobei die unterschiedlichen Teile (21-23) der Dämpfungsvorrichtung (20) mehrere drehbare Lamellen (24) umfassen, die angepasst sind, mittels eines Aktors (25-27) pro Teil (21-23) gesteuert zu werden.

3. System (1) nach Anspruch 2, wobei die drehbaren Lamellen (24) der unterschiedlichen Teile (21-23) der Dämpfungsvorrichtung (20) auf einem gemeinsamen Rahmen (28) befestigt sind.

4. System (1) nach Anspruch 3, wobei die Aktoren (25-27) durch den gemeinsamen Rahmen (28) getragen werden.

5. Verfahren zum Steuern des Abtauens eines Luftaufbereitungssystems (1) nach einem der vorstehenden Ansprüche, wobei das System (1) bei normalem Wärmeaustauschbetrieb mit einem vorbestimmten Druckabfall über einem Abluftabschnitt (11) eines Wärmetauschers (10) und mit einem vollständig geschlossenen Bypass (13) und einem vollständig offenen Zuluftabschnitt (12) arbeitet,
**gekennzeichnet durch** die Schritte
äußeres Messen einer Zulufttemperatur (I) zum System (1), Messen eines Drucks vor dem Abluftabschnitt (11) des Wärmetauschers (10),
Messen eines Drucks nach dem Abluftabschnitt (11) des Wärmetauschers (10) vor einem Abluftventilator (6),
Berechnen eines Druckabfalls über dem Abluftabschnitt (11) des Wärmetauschers (10) und,
wenn eine gemessene Außentemperatur unter dem Gefrierpunkt liegt und es einen erhöhten Druckabfall gibt, Wechseln zu einem zeitgesteuerten Abtauzyklus, der in vier aufeinanderfolgende Zeiträume aufgeteilt ist,
das heißt, in einen ersten und einen vierten Zeitraum, während denen ein Zustrom von Zuluft (I) in den Bypass (13) teilweise gedrosselt ist, ein Zustrom von Zuluft (I) in die erste Hälfte (14) des Zuluftabschnitts (12) des Wärmetauschers (10) vollständig gestoppt ist und ein Zustrom von Zuluft (I) in die andere Hälfte (15) des Zuluftabschnitts (12) des Wärmetauschers (10) ungedrosselt ist,
und in einen zweiten und einen dritten Zeitraum, während denen ein Zustrom von Zuluft (I) in den Bypass (13) teilweise gedrosselt ist, ein Zustrom von Zuluft (I) in die erste Hälfte (14) des Zuluftabschnitts (12) des Wärmetauschers (10) ungedrosselt ist und ein Zustrom von Zuluft (I) in die andere Hälfte (15) des Zuluftabschnitts (12) des Wärmetauschers (10) vollständig gestoppt ist.

6. Verfahren nach Anspruch 5, umfassend den weiteren Schritt des Umschaltens zu einem reduzierten Wärmeaustauschmodus im Anschluss an den neuen Abtauzyklus, während dem der Zustrom von Zuluft (I) in den Bypass (13) teilweise gedrosselt ist und der Zustrom von Zuluft (I) in die zwei Hälften des Zuluftabschnitts (12) des Wärmetauschers (12) ungedrosselt ist, wenn die Zeit zwischen dem Ende eines zeitgesteuerten Abtauzyklus und dem Beginn eines neuen zeitgesteuerten Abtauzyklus kürzer ist als die vorbestimmte Zeit des Abtauzyklus.

## Revendications

1. Système de traitement d'air (1), comprenant :
un échangeur de chaleur (10) pour transférer de la chaleur d'air d'évacuation chaud (E), lequel s'écoule dans le système (1) via un conduit d'air de sortie (2) dudit système (1) et le quitte via un ventilateur d'air d'évacuation (3) de celui-ci et entre lesquels passe une section d'air d'évacuation (11) de l'échangeur de chaleur (10), à de l'air d'alimentation froid (1), lequel s'écoule dans le système (1) via un conduit d'air d'alimentation (4) dudit système (1) et le quitte via un ventilateur d'air d'alimentation (5) de celui-ci et entre lesquels passe une section d'air d'alimentation (12) de l'échangeur de chaleur (10), ladite section d'air d'alimentation (12) étant séparée de ladite section d'air d'évacuation (11),
une dérivation (13) qui communique avec le conduit d'air d'alimentation (4) en amont de ladite section d'air d'alimentation (12) et le ventilateur d'air d'alimentation (5) en aval de celle-ci et présente une résistance à l'écoulement qui correspond à une résistance à l'écoulement au travers normale de la section d'air d'alimentation (12) de l'échangeur de chaleur (10), et
un dispositif d'atténuation (20) qui permet l'ouverture et la fermeture de la dérivation (13) et de la section d'air d'alimentation (12) d'un côté amont de la section d'air d'alimentation (12),
**caractérisé en ce que**
le dispositif d'atténuation (20) est divisé en au moins trois parties (21-23) à commande individuelle, dont
une première partie (21) est adaptée pour arrêter un afflux d'air d'alimentation (I) dans la dérivation (13) pour permettre un afflux d'étranglement prédéterminé d'air d'alimentation (I) dans la dérivation (13) ou pour permettre un afflux non étranglé d'air d'alimentation (I) dans la dérivation (13),
une deuxième partie (22) étant adaptée pour arrêter un afflux d'air d'alimentation (I) dans une première moitié (14) de la section d'air d'alimentation (12) de l'échangeur de chaleur (10) ou pour permettre un afflux non étranglé d'air d'alimentation (I) dans ladite première moitié (14), et
une troisième partie (23) étant adaptée pour arrêter un afflux d'air d'alimentation (I) dans une deuxième moitié (15) de la section d'air d'alimentation (12) de l'échangeur de chaleur (10) ou pour permettre un afflux non étranglé d'air d'alimentation (I) dans ladite deuxième moitié (15).

2. Système (1) selon la revendication 1, dans lequel les différentes parties (21-23) du dispositif d'atténuation (20) comprennent une pluralité de lattes rotatives (24) adaptées pour être commandées au moyen d'un actionneur (25-27) par partie (21-23).

3. Système (1) selon la revendication 2, dans lequel les lattes rotatives (24) des différentes parties (21-23) du dispositif d'atténuation (20) sont montées sur un cadre commun (28).

4. Système (1) selon la revendication 3, dans lequel lesdits actionneurs (25-27) sont portés par le cadre commun (28).

5. Procédé de commande du dégivrage d'un système de traitement d'air (1) selon l'une quelconque des revendications précédentes, ledit système (1), en cas de fonctionnement d'échange de chaleur normal, travaillant avec une chute de pression prédéterminée à travers une section d'air d'évacuation (11) d'un échangeur de chaleur (10) et avec une dérivation (13) complètement fermée et une section d'air d'alimentation (12) complètement ouverte,
**caractérisé par** les étapes suivantes :
la mesure à l'extérieur d'une température de l'air d'alimentation (I) vers le système (1), la mesure d'une pression en amont de la section d'air d'évacuation (11) de l'échangeur de chaleur (10),
la mesure, devant un ventilateur d'air d'échappement (6), d'une pression en aval de la section d'air d'évacuation (11) de l'échangeur de chaleur (10),
le calcul d'une chute de pression à travers la section d'air d'évacuation (11) de l'échangeur de chaleur (10), et,
si une température extérieure mesurée est inférieure à un point de congélation et qu'il y a une chute de pression accrue, la commutation à un cycle de dégivrage temporisé qui est divisé en quatre périodes consécutives,
à savoir une première et une quatrième période pendant lesquelles un afflux d'air d'alimentation (I) dans la dérivation (13) est partiellement étranglé, un afflux d'air d'alimentation (I) dans la première moitié (14) de la section d'air d'alimentation (12) de l'échangeur de chaleur (10) étant complètement arrêté et un afflux d'air d'alimentation (I) dans l'autre moitié (15) de la section d'air d'alimentation (12) de l'échangeur de chaleur (10) n'étant pas étranglé,
et une deuxième et troisième période pendant lesquelles un afflux d'air d'alimentation (I) dans la dérivation (13) est partiellement étranglé, un afflux d'air d'alimentation (I) dans la première moitié (14) de la section d'air d'alimentation (12) de l'échangeur de chaleur (10) étant non étranglé, et un afflux d'air d'alimentation (I) dans l'autre moitié (15) de la section d'air d'alimentation (12) de l'échangeur de chaleur (10) étant complètement arrêté.

6. Procédé selon la revendication 5, comprenant l'étape suivante consistant à, si la durée entre la fin d'un cycle de dégivrage temporisé et le début d'un nouveau cycle de dégivrage temporisé est plus courte que la durée prédéterminée du cycle de dégivrage, à la suite du nouveau cycle de dégivrage, commuter pour passer à un mode d'échange de chaleur réduit pendant lequel l'afflux d'air d'alimentation (I) dans la dérivation (13) est partiellement étranglé et l'afflux d'air d'entrée (I) dans les deux moitiés de la section d'air d'alimentation (12) de l'échangeur de chaleur (12) est non étranglé.
